# EUROPÄISCHE PATENTSCHRIFT

(11) **EP 2 635 843 B1**
(45) Veröffentlichungstag und Bekanntmachung des Hinweises auf die Patenterteilung: **17.12.2014**
(21) Anmeldenummer: 12780078.7
(22) Anmeldetag: 17.08.2012
(51) Int. Cl.: F21V 5/04

(54) **LED-LEUCHTE MIT OPTIK MIT FRESNELLINSE UND ASPHÄRISCHEN LINSEN IN WABENANORDNUNG**
LED LAMP
LAMPE À DEL

(30) Priorität: 21.08.2011 DE 102011111239
(43) Veröffentlichungstag der Anmeldung: 11.09.2013
(73) Patentinhaber: JENOPTIK Polymer Systems GmbH, 07819 Triptis (DE)
(72) Erfinder: GOEBEL, Mathias, 99423 Weimar (DE); FRITSCH, Eugen, 77709 Oberwolfach (DE); SCHUMACHER, Volker, 99339 Bad Waldsee (DE)
(74) Vertreter: Waldauf, Alexander
(86) Internationale Anmeldenummer: PCT/DE2012/000831
(87) Internationale Veröffentlichungsnummer: WO 2013/026440

(56) Entgegenhaltungen:
- WO-A1-2011/080767
- WO-A1-2011/124393
- DE-A1-102007 043 192
- DE-U1-202006 014 814
- JP-A- 59 095 525
- US-A1- 2006 139 953
- US-B2- 7 648 256
- US-B2- 7 927 520

## Beschreibung

Die vorliegende Erfindung betrifft eine LED-Leuchte mit verbesserter lichttechnischer Effizienz, die insbesondere als Arbeitsplatzleuchte geeignet ist. Arbeitsplatzleuchte definiert sich im Sinne der Erfindung als eine für solche Einsatzgebiete geeignete Leuchte, bei denen geringe Helligkeitstoleranzen und scharf gezeichnete Kanten bei der Lichtverteilung von Bedeutung sind. Dies können spezielle Arbeitsplätze in Labors, in Büros, in medizinischen Einrichtungen oder Maschinenbeleuchtungen sein. Das mögliche Einsatzgebiet ist darauf jedoch nicht begrenzt. Die erfindungsgemäße LED-Leuchte zeichnet sich durch exakt begrenzte Beleuchtungsflächen mit exakten Rändern aus, die zudem modulartig aufgebaut werden können und mit Hilfe von Zoomelementen, die zu beleuchtenden Flächen einengen bzw. erweitern können.

Das Streben nach immer besserer Lichtausbeute bei Einsparung von Energie ist allgemein eine Forderung, die an die Entwicklung von LEDs als Lichtquellen gerichtet ist. Besonders lichtstarke LEDs ermöglichen den Einsatz in der Industrie oder in der Medizin, speziell für gut und gleichmäßig auszuleuchtende Arbeitsplätze, wie z.B. in Laboren, in der Qualitätskontrolle oder in der Messtechnik oder Operationstechnik. Die kontinuierliche Weiterentwicklung von dicht bestückten LED-Lichtfeldern bieten dafür die Voraussetzung. Bekannt ist aus DE 102010004221 A1, dass Leuchten mit einer Vielzahl punktförmiger Lichtquellen, insbesondere LEDs, welche in einer Ebene angeordnet sind, ausgestattet sind. Bekannt ist auch diese Lichtquellen auf einer oder mehrerer Platinen anzuordnen und darüber in einem konstanten Abstand eine Licht streuende Platte so anzuordnen, dass diese als ein Lichtdichteintegrator wirkt.
Aus WO 2011/032975 A1 ist ein LED-Leuchtenelement bekannt, welches eine homogene Lichtverteilung zum Ziel hat und bei der ein längliches Leuchtenelement eine Mehrzahl von entlang einer Längsrichtung angeordneten LEDs enthält, wobei über jeder Lichtquelle vorzugsweise eine Linse angeordnet ist, so dass diese als diffuse Strahler wirken.
Bekannt sind außerdem z.B. aus der DE 102004055839 A1 eine Operationsleuchte, die eine bessere Ausleuchtung des Operationsfeldes zum Ziel hat.
In der WO 2004/098857 A1 wird ein Verfahren zur Herstellung eines Licht streuenden Formteils beschrieben, welches besonders eine preiswerte und hohe Produktivität erlaubt. Außerdem soll das Ergebnis zugleich mit hoher optischer Güte ausgestattet sein.
In WO 2011/090767 wird eine LED-Leuchte nach dem Oberbegriff des Anspruchs offenbart.
Die bekannten Lösungen erfüllen jedoch allesamt nicht die Erfordernisse, wie sie für eine gleichmäßige und exakt begrenzbare Beleuchtung hochsensibler Arbeitsplätze erforderlich ist. Außerdem sollen diese Leuchten einfach im Aufbau und preisgünstig herzustellen sein.

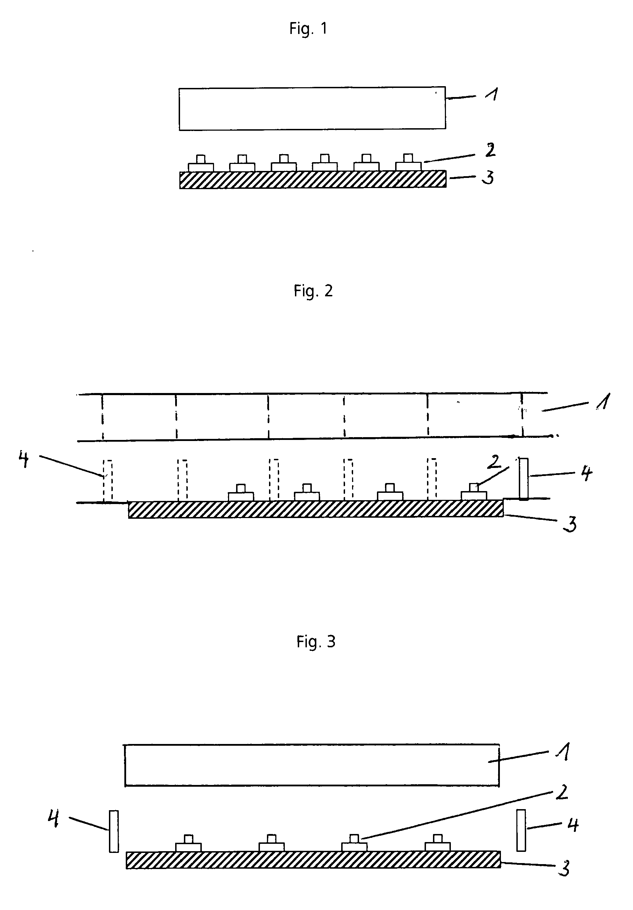

Aufgabe der Erfindung ist es also, eine verbesserte LED-Leuchte bzw. ein -Leuchtensystem zu entwickeln, welche eine Verbesserung der lichttechnischen Effizienz bewirken und sich durch geringste Helligkeitstoleranzen auszeichnen sowie eine verbesserte Objekt- und Kantenbeleuchtung erzielen.
Die Aufgabe der Erfindung wird durch eine LED-Leuchte nach Anspruch 1 gelöst. Größe und Anzahl richten sich nach den speziellen Erfordernissen und Gegebenheiten in der die Leuchte Verwendung findet. Die Vorsatzoptik (1) besteht vorzugsweise aus einem geeigneten Licht streuenden Kunststoff, wie z.B. PMMA. Die Herstellung erfolgt vorzugsweise mit einer dafür geeigneten Spritzgusstechnik. Eine im erforderlichen Winkel und Abstand zueinander (LED zur Linse) gestaltete Lichtverteilung schafft einen optimalen Lichtausleuchtung bei optimalem Bauraum. Aus Fig. 1 ist eine Prinzipdarstellung der Erfindung zu entnehmen. Die LEDs sind auf einer Platine (3) angeordnet. In Fig. 2 und Fig. 3 werden besondere Ausführungen der LED-Leuchte aufgezeigt. Die erfindungsgemäße LED-Leuchte ist in besonderer Ausführung durch mindestens eine Monitordiode (4) zur Helligkeitsnachführung geregelt. In Fig. 2 weist das Ausführungsbeispiel mehrere so genannte Monitordioden auf, die als Photodioden ausgebildet sind. Diese Monitordioden ermitteln (messen) die Helligkeit des jeweiligen zugeordneten Messbereiches zwischen den LEDs und der darüber angeordneten Vorsatzoptik. Durch geeignete elektronische Steuerungseinrichtungen ist es möglich, dass die Ergebnisse der Monitordioden so erfasst werden, dass diese Messergebnisse mit den Sollwerten der Leuchte bzw. der Leuchtenabschnitte verglichen werden, und in einem weiteren Schritt Nachregelungen der LEDs erfolgen, um somit Helligkeitsverstärkungen oder Dimmeffekte zu erzielen.
Über geeignete Steuerelemente (nicht dargestellt) können auch ein Ein- und Ausschalten über ein entsprechendes Interface erfolgen. Zusätzlich kann die Leuchte mit einer Erfassungsvorrichtung ausgestattet werden, die die Alterung der Monitordioden ausliest und im Bedarfsfall einen Wechsel der LEDs veranlasst wird. Dies kann z. B. bei sehr genau und exakt zu beleuchtenden Arbeitsplätzen, wie Messeinrichtungen, Probenuntersuchungen etc. von Bedeutung sein.

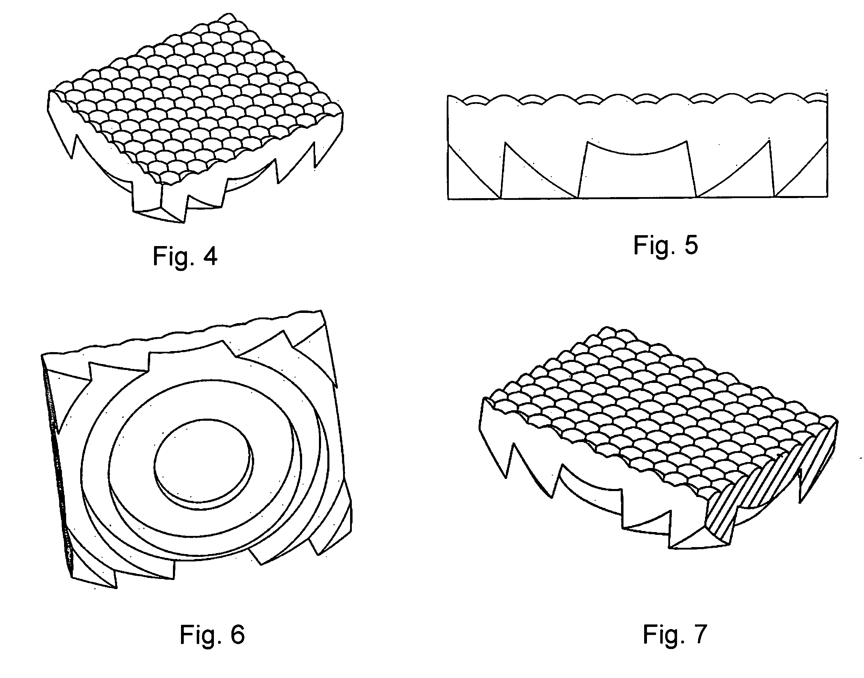

Die Figuren 4 bis 8 zeigen die Vorsatzoptik (1) als ein Lichtlenkungselement, wobei Fig. 4 eine Darstellung der Lichtaustrittsfläche (Oberfläche mit asphärischen Linsen) und zugleich Teile der Seitenansicht liefert. Hierbei ist die modulare Bauweise der Verbindung von Lichteintrittselement an der Unterseite der Vorsatzoptik sowie der Lichtaustrittselemente gut erkennbar. Die Elemente sind in bevorzugter Weise als beliebig in Größe und Anzahl an asphärischen Linsen gestaltbar und durch die modulartige Bauweise erweiterbar.

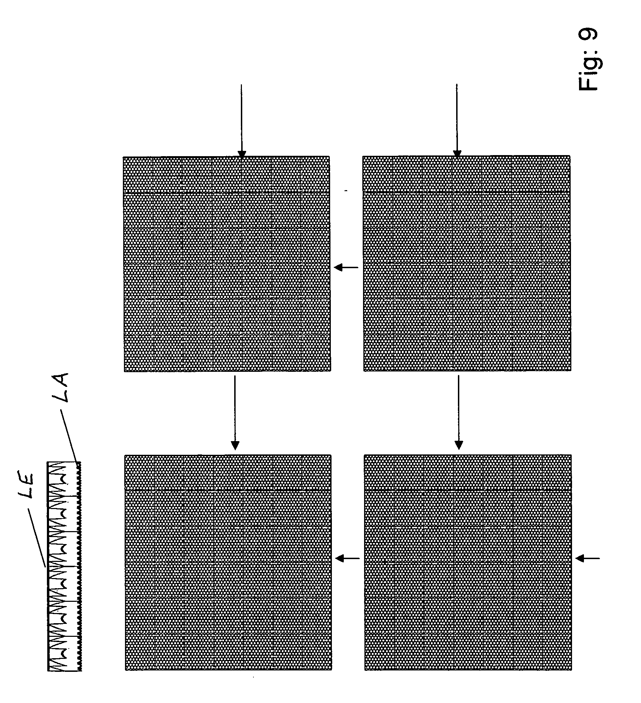

Fig. 5 zeigt die die Seitenansicht deiner erfindungsgemäßen Vorsatzoptik. Fig. 6 zeigt die Unterseite der Vorsatzoptik mit ihrer Lichteintrittsfläche. Die in diesem erfindungsgemäßen Aufbau verwendete Fresneloptik ist erkennbar. Die Größe und Spezifikation der Fresneloptik ist in geeigneter Ausführung der Leuchte und der zu beleuchtenden Fläche angepasst. Fig. 7 zeigt eine Ausführung einer so genannten Kachel der Fresnelvorsatzoptik (Größenverhältnisse und Anzahl sind nur als Bsp.). Schraffiert dargestellt zeigt sie eine Variante, wie z. B. getrennte Module (Fresneloptik und asphärische Linsen) miteinander verbunden, z.B. an den Seiten verklebt, werden können.

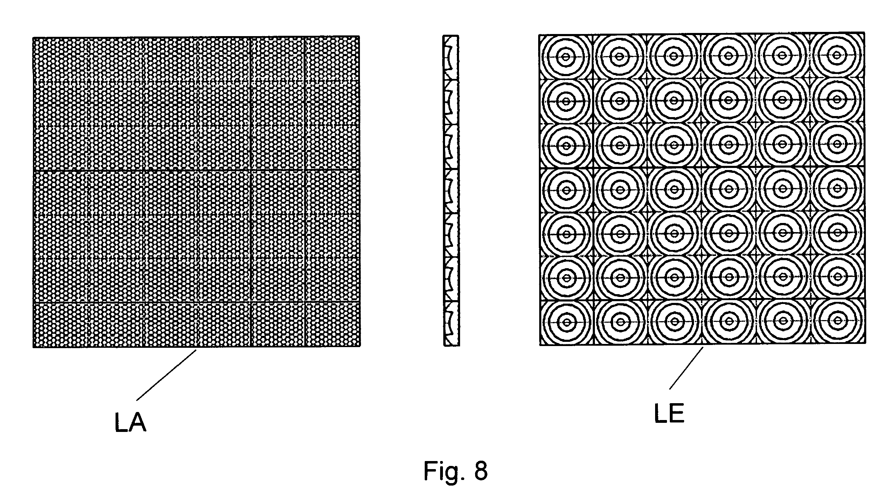

Fig. 8 zeigt Ansichten der Lichtaustrittseite (LA), einer Seitenansicht (gekippt) und der Lichteintrittseite (LE).
Aus den angefügten Unterlagen sind Beispiele und für die Ausgestaltung der Arbeitsplatzleuchte bzw. Maschinenleuchte zu entnehmen. In Fig. 9 wird ein Beispiel einer Verbindung von Modulteilen dargestellt. Die Ausgestaltung der Anzahl der Module sowie wiederum deren Anzahl und Größe der Lichtaustrittselemente sind beliebig gestaltbar. Im Beispiel werden Austrittselemente aus 6 x 7 quadratischen Einzelelementen verarbeitet, die wiederum in geeigneter Weise verbunden werden können.
Eine Variante der erfinderischen Lösung beinhaltet z.B. folgende Ausstattungen. Es versteht sich, dass mit dieser Ausführung der Schutzumfang der erfinderischen Lösung sich nicht erschöpft, sondern äquivalente Designs davon erfasst sind:
- Anzahl der LEDs 6 x 42 = 252 LEDs
- Betriebsstrom LED I_{LED} = 70 mA
- Größe eines Optikelements A = 20 x 16,5 mm
- Zentrale Beleuchtungsstärke 1 m Abstand E = 1300 lx
- 50% Durchmesser bei 1 m Abstand d50 = 1,3 m ( 33°)
- 10% Durchmesser bei 1 m Abstand d10 = 3,0 m (54°)
- Lichtstrom in der Verteilung ΦVerteilung = 1800 Im Basis: Gaussförmige Verteilung mit IZ = 1300 cd und
   α50% = 33°
- Geometrische Verluste Optik voptik = 40 %
   Φ = 3000 Im
- Fresnelverluste Abdeckscheibe und Optik vFR = 15 %
   Φ = 3530 Im
- Thermische Degradation (Jkt. 85°C) vtherm = 15 %
   Φ = 4150 Im
- Lebensdauer Degradation vLD = 15 %
   Φ = 4880 Im
- Lichtstrom pro LED Φ LED = 4512 Im / 252 = 19,4 Im

Als LED wird bspw. eine LED Osram LUW G5GP verwendet.
- Baugröße 6 x 3,6 x 2,2 mm
- Abstrahlwinkel α = 135°
- Farbtemperatur ϑ = 6500 K
- Typ. Lichtstrom (bei I = 100 mA) Φ = 18 -39 Im
- Relativer Lichtstrom bei 70 mA Φrel = 75 %
- Erforderliches Binning Φ = 19,4 /0,75 = 25,8 Im entspricht Binning GZ (24 - 28 Im)

Die Lichteintrittsseite (LE) ist beispielsweise wie folgt gestaltet:
- Fresnellinse
   Maximale Segmenttiefe t = 3 mm
   Minimaler Segmentwinkel ϕ > 25°
   Entformungsschräge β = 3°
   Radius im Werkzeugtal r > 10 µm

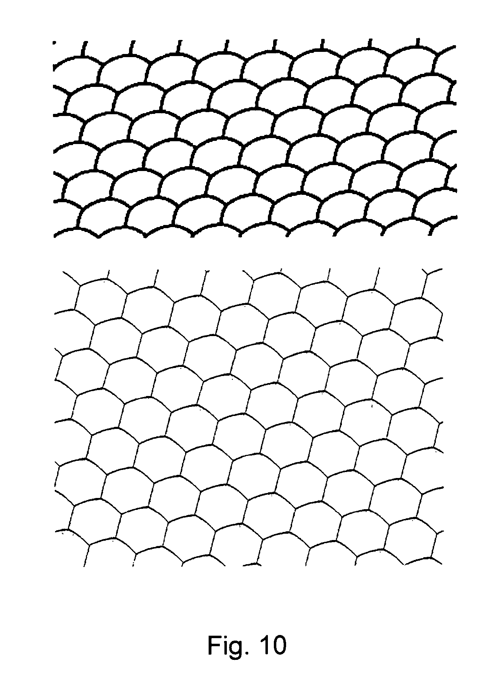

Abstand zur Lichtquelle d = 6,5 mm (Mitte) (8 mm zur Platine).
Die Lichtaustrittsseite hat erfindungsgemäß asphärische Linsen in hexagonaler Ausführung gemäß Fig. 10. Hierbei sind Gestaltungsweisen in Winkelstellung und Größe der hexagonalen Linsen gestaltbar.
In der beispielhaften Ausführung beträgt die Schlüsselweite 1,92 mm und der Scheitelradius r = 0,90 mm (nicht maßstabgetreu dargestellt).

Abhängig von erforderlicher Lichtverteilung und Beleuchtungsstärke sowie des Abstandes der Leuchte von der zu beleuchtenden Fläche, werden die geeigneten Parameter, wie Anzahl der Linsen, Größe der zugeordneten Fresneloptik/en, Lichtstärke der LED, Abstand LED von Vorsatzoptik usw., ausgewählt.

Der Abstand der Linse zur LED beträgt in der beispielhaften Ausführung 4,5 mm und 6mm zu Platine auf der die LEDs angeordnet sind.

Die Effizienz kann durch kürzere Brennweiten erhöht werden. Es ist natürlich möglich durch Optimierungsmaßnahmen der Aufweitungsoptik am Lichtaustritt, die Effizienz entsprechend den Erfordernissen am Arbeitsplatz anzupassen und zu verbessern.
In besonderer Ausführung ist es natürlich auch möglich die kompakte Vorsatzoptik als 2 Einzelmodule (Lichteintrittsoptik und Lichtaustrittsoptik) zu gestalten und miteinander in bedarfsgerechter Form zu verbinden.
In besonderer Ausführung der Erfindung sind in der LED-Leuchte jeder LED, genau eine darüber liegende erfindungsgemäße Vorsatzoptik zugeordnet.
Um eine entsprechend den jeweiligen Erfordernissen angepasste Optik als Vorsatzoptik zu gestalten, ist es auch Gegenstand der Erfindung diese in unterschiedlichen Größen, in unterschiedlichen Abständen und/oder in modularer Bauweise zu gestalten. In einer besonderen Ausführung werden farbige LEDs verwendet, um bestimmte Punkte im zu beleuchtenden Feld zu markieren und/oder die Ränder der Beleuchtung besser zu kennzeichnen. Beispielsweise können so festgestellte Risse in Metallen oder Einschlüsse in Kunststoffen markiert und zum späteren Zeitpunkt durch Abspeicherung der Lageposition bearbeitet werden. Es ist auch in einer weiteren Ausführung möglich der Vorsatzoptik, die aus einem geeigneten Kunststoff hergestellt wird, Nanopartikel beizumischen und/oder auf der Lichteintritts- und/oder der Lichtaustrittsseite zu beschichten.
Es hat sich gezeigt, dass insbesondere bei Beleuchtung von Nebel bildenden bzw. Feuchte absondernden Arbeitsoberflächen sich leicht ein Feuchtefilm auf der Leuchtenoberfläche absondern kann. Dies kann erfindungsgemäß durch die Nanobeschichtung weitgehend verhindert werden. Die sich ggf. absondernde Feuchtigkeit kann durch ein integriertes Belüftingssystem oder Gebläse in Leuchtennähe verhindert werden.
Es ist auch Gegenstand der Erfindung die Leuchte beliebig durch einzelne farbige Module bzw. teilweise eingefärbte Module zu einem Leuchtensystem zu ergänzen. Somit können zum Beispiel bestimmte Markierungen auf der Beleuchtungsfläche vorgenommen werden bzw. vorgegeben werden.
Es ist auch möglich unterschiedlich gefärbte Module oder Modulbestandteile einzusetzen.
In bestimmten Fällen ist es sinnvoll ein Schutzglas /scheibe über die Vorsatzoptik anzubringen.
Die Bestandteile der Leuchte sind in bevorzugter Weise mit einem UV-Klebstoff, z.B. lichthärtenden Acrylatkleber, miteinander verbunden. Der Acrylatkleber kann hierzu ein auf Basis eines modifizieren Urethanacrylats, welcher einkomponentig, lösungsmittelfrei und thixotrop ist, basieren.

## Patentansprüche

1. LED- Leuchte enthaltend wenigstens eine LED-Strahlungsquelle, der zum Bündeln und Einsammeln des abgestrahlten Lichts eine Vorsatzoptik in der Art zugeordnet ist, dass sich auf der Lichteintrittsseite eine Fresnelvorsatzoptik befindet, dadurch gekennzeichntet, dass auf der Lichtaustrittsseite der Vorsatzoptik asphärische Linse/n in hexagonaler Ausführung zugeordnet sind.

2. LED- Leuchte nach Anspruch 1, **dadurch gekennzeichnet, dass** die Vorsatzoptik als Einzelmodul oder Mehrfachmodul aufgebaut ist.

3. LED- Leuchte nach Anspruch 1 bis 2, **dadurch gekennzeichnet, dass** die Vorsatzoptik aus einem Licht streuendem Kunststoff besteht.

4. LED- Leuchte nach mindestens einem der vorherigen Ansprüche, **dadurch gekennzeichnet, dass** Nanopartikel in der Vorsatzoptik enthalten sind.

5. LED- Leuchte nach mindestens einem der vorherigen Ansprüche, **dadurch gekennzeichnet, dass** die Vorsatzoptik mit Nanopartikeln beschichtet ist.

6. LED- Leuchte nach mindestens einem der vorherigen Ansprüche, **dadurch gekennzeichnet, dass** die Arbeitsleuchte (LEDs) mindestens eine Monitordiode enthält, die der Erfassung der Daten zur Helligkeitsnachführung oder von Dimmeffekten dient.

7. LED- Leuchte nach Anspruch 6, **dadurch gekennzeichnet, dass** eine elektronische Steuereinrichtung zur Verarbeitung der Messdaten der Monitordiode enthalten ist.

8. LED- Leuchte nach mindestens einem der vorherigen Ansprüche, **dadurch gekennzeichnet, dass** mindestens eine der LED-Strahlungsquellen eine farbige LED ist.

9. LED- Leuchte nach mindestens einem der vorherigen Ansprüche, **dadurch gekennzeichnet, dass** mindestens eine der Module der Vorsatzoptik zumindest teilweise farbig gestaltet sind.

## Claims

1. LED lamp, including at least one LED radiation source, which is assigned an optical attachment for focusing and collecting the emitted light such that a Fresnel optical attachment is positioned on the light-entry side, **characterized in that** the optical attachment is assigned aspherical lens(es) in hexagonal configuration on the light-exit side.

2. LED lamp according to Claim 1, **characterized in that** the optical attachment is constructed as an individual module or multi-module.

3. LED lamp according to Claims 1 and 2, **characterized in that** the optical attachment consists of a light-scattering plastic.

4. LED lamp according to at least one of the preceding claims, **characterized in that** nanoparticles are contained in the optical attachment.

5. LED lamp according to at least one of the preceding claims, **characterized in that** the optical attachment is coated with nanoparticles.

6. LED lamp according to at least one of the preceding claims, **characterized in that** the work lamp (LEDs) includes at least one monitor diode which serves to capture the data for the brightness adjustment or dimming effects.

7. LED lamp according to Claim 6, **characterized in that** an electronic control device for processing the measurement data of the monitor diode is included.

8. LED lamp according to at least one of the preceding claims, **characterized in that** at least one of the LED radiation sources is a color LED.

9. LED lamp according to at least one of the preceding claims, **characterized in that** at least one of the modules of the optical attachment is configured to be at least partially colored.

## Revendications

1. Lampe à DEL comportant au moins une source de rayonnement à DEL qui est associée à une optique additionnelle pour concentrer et collecter la lumière émise de telle manière qu'une optique additionnelle de Fresnel se trouve du côté d'incidence de la lumière, **caractérisée en ce qu'**une ou des lentille(s) asphérique(s) réalisée(s) de façon hexagonale est/sont associée(s) à l'optique additionnelle du côté de sortie de la lumière.

2. Lampe à DEL selon la revendication 1, **caractérisée en ce que** l'optique additionnelle est réalisée sous la forme d'un module unique ou de modules multiples.

3. Lampe à DEL selon les revendications 1 et 2, **caractérisée en ce que** l'optique additionnelle est constituée d'une matière plastique diffusant la lumière.

4. Lampe à DEL selon au moins l'une des revendications précédentes, **caractérisée en ce que** des nanoparticules sont contenues dans l'optique additionnelle.

5. Lampe à DEL selon au moins l'une des revendications précédentes, **caractérisée en ce que** l'optique additionnelle est revêtue de nanoparticules.

6. Lampe à DEL selon au moins l'une des revendications précédentes, **caractérisée en ce que** la lampe de travail (DELs) contient au moins une diode de contrôle qui est destinée à détecter les données d'asservissement de luminosité ou des effets d'atténuation.

7. Lampe à DEL selon la revendication 6, **caractérisée en ce qu'**il est prévu un dispositif de commande électronique destiné à traiter les données de mesure de la diode de contrôle.

8. Lampe à DEL selon au moins l'une des revendications précédentes, **caractérisée en ce qu'**au moins l'une des sources de rayonnement à DEL est une DEL colorée.

9. Lampe à DEL selon au moins l'une des revendications précédentes, **caractérisée en ce qu'**au moins l'un des modules de l'optique additionnelle est réalisée au moins partiellement de façon colorée.
